# EUROPÄISCHE PATENTSCHRIFT

(11) **EP 3 528 922 B1**
(45) Veröffentlichungstag und Bekanntmachung des Hinweises auf die Patenterteilung: **31.03.2021**
(21) Anmeldenummer: 17791304.3
(22) Anmeldetag: 11.10.2017
(51) Int. Cl.: B01D 46/00, F01N 3/023

(54) **RUSSPARTIKELFILTER UND VERFAHREN ZUM BETREIBEN EINES RUSSPARTIKELFILTERS**
PARTICULATE FILTER AND PROCESS OF USING SAME
FILTRE A PARTICULE ET L'UTILISATION

(30) Priorität: 18.10.2016 DE 102016220423
(43) Veröffentlichungstag der Anmeldung: 28.08.2019
(73) Patentinhaber: Hug Engineering AG, 8352 Elsau (CH)
(72) Erfinder: KILCHSPERGER, Roland, 8360 Wallenwil (CH); CAVEGN, Lukas, 8512 Lustdorf (CH)
(74) Vertreter: Hoeger, Stellrecht & Partner Patentanwälte mbB
(86) Internationale Anmeldenummer: PCT/EP2017/075977
(87) Internationale Veröffentlichungsnummer: WO 2018/073080

(56) Entgegenhaltungen:
- WO-A1-87/07324
- AT-A1- 511 688
- DE-A1- 3 808 075
- US-A- 4 641 496

## Beschreibung

Die vorliegende Erfindung betrifft eine Strömungsvorrichtung und ein Verfahren zum Betreiben einer Strömungsvorrichtung. Die Strömungsvorrichtung ist insbesondere eine Abscheidevorrichtung zur Verwendung als Abgasreinigungsvorrichtung in einem Abgasstrang eines Verbrennungsmotors. Der Verbrennungsmotor ist insbesondere ein mit Schweröl als Brennstoff betriebener Verbrennungsmotor, beispielsweise ein Schiffsmotor, und/oder ein sonstiger Verbrennungsmotor, welcher beispielsweise mit feststoffbelasteten Brennstoffen und/oder feststoffbelasteten Schmierstoffen betrieben wird.

Eine Strömungsvorrichtung ist beispielsweise aus der WO 2013/179266 A1 oder aus der AT 511 688 A1 bekannt.

Der vorliegenden Erfindung liegt die Aufgabe zugrunde, eine Strömungsvorrichtung bereitzustellen, welche einfach aufgebaut und zuverlässig sowie energieeffizient betreibbar ist.

Diese Aufgabe wird erfindungsgemäß durch eine Strömungsvorrichtung zum Entfernen von Verunreinigungen aus einem Rohgasstrom, insbesondere zum Abscheiden von Rußpartikeln aus Verbrennungsabgas, mit den Merkmalen des Anspruchs 1 gelöst.

Dadurch, dass die Strömungsvorrichtung mehrere Strömungssegmente sowie eine Regenerationsvorrichtung mit einer Andockvorrichtung umfasst, kann die Strömungsvorrichtung vorzugsweise einfach aufgebaut sowie zuverlässig und energieeffizient betrieben werden.

Die Strömungsvorrichtung ist vorzugsweise eine Abscheidevorrichtung.

Die Strömungssegmente sind vorzugsweise Abscheidesegmente.

Die Strömungskörper sind vorzugsweise Abscheidekörper.

Der Reinigungsmodus ist vorzugsweise ein Abscheidemodus.

Zum Entfernen von Verunreinigungen werden die Verunreinigungen vorzugsweise abgeschieden und/oder umgewandelt.

Der Rohgasstrom ist insbesondere ein Abgasstrom einer Verbrennungsvorrichtung, welche insbesondere mit Schweröl, beispielsweise Heavy Fuel Oil (HFO) oder Marine Fuel Oil (MFO) etc. als Brennstoff betrieben wird. Die Verbrennungsvorrichtung ist insbesondere eine stationäre oder mobile Verbrennungsvorrichtung. Beispielsweise ist die Verbrennungsvorrichtung ein Schiffsmotor.

Günstig kann es sein, wenn die Strömungsvorrichtung eine Bewegungsvorrichtung zur Bewegung der Andockvorrichtung und/oder der Strömungssegmente derart umfasst, dass die Andockvorrichtung wahlweise an unterschiedliche Strömungssegmente andockbar ist.

Die Strömungssegmente sind beispielsweise mittels der Bewegungsvorrichtung in eine Drehbewegung versetzbar.

Die Bewegungsvorrichtung umfasst insbesondere eine Antriebsvorrichtung, mittels welcher die Strömungssegmente und/oder die Andockvorrichtung automatisch und/oder automatisiert bewegbar sind.

Beispielsweise kann vorgesehen sein, dass die Strömungssegmente mittels der Antriebsvorrichtung der Bewegungsvorrichtung in diskreten Schritten bewegbar sind, wobei mit jedem Schritt vorzugsweise ein weiteres Strömungssegment zur Regeneration desselben relativ zu der Andockvorrichtung positioniert wird. Insbesondere sind die Strömungssegmente schrittweise nacheinander in eine Regenerationsposition bringbar, in welcher die Andockvorrichtung an das jeweilige Strömungssegment andockbar ist.

Die Antriebsvorrichtung, insbesondere ein Motor, beispielsweise ein Elektromotor, ist vorzugsweise auf einer der Reingasabführung zugewandten Reingasseite der Strömungssegmente angeordnet.

Günstig kann es sein, wenn die Antriebsvorrichtung innerhalb eines Gehäuses der Strömungsvorrichtung angeordnet ist, so dass insbesondere eine Wellendurchführung durch eine Gehäusewand entbehrlich ist. Hierdurch kann eine optimierte Dichtheit erhalten werden.

Bei einer Ausgestaltung der Erfindung kann vorgesehen sein, dass die Strömungssegmente jeweils für sich genommen zumindest näherungsweise kreiszylindersegmentförmig ausgebildet sind.

Alternativ oder ergänzend hierzu kann vorgesehen sein, dass die Strömungssegmente zusammen eine zumindest näherungsweise kreiszylinderförmige Strömungseinheit bilden. Beispielsweise bilden die Strömungssegmente zusammen eine zumindest näherungsweise hohlkreiszylinderförmige Strömungseinheit.

Eine Strömungseinheit ist vorzugsweise eine Abscheideeinheit.

Jedes Strömungssegment umfasst vorzugsweise jeweils mehrere Strömungskörper, welche in voneinander verschiedenen und/oder räumlich voneinander getrennten Strömungskörperaufnahmen des jeweiligen Strömungssegments aufgenommen sind.

Die Strömungskörper sind insbesondere in den Strömungskörperaufnahmen festgelegt.

Günstig kann es sein, wenn die Strömungskörper zumindest näherungsweise kreiszylinderförmig ausgebildet sind. Die Strömungskörperaufnahmen sind vorzugsweise komplementär hierzu ausgebildet. Insbesondere sind die Strömungskörperaufnahmen vorzugsweise kreishohlzylinderförmig ausgebildet.

Vorteilhaft kann es sein, wenn bezüglich einer radialen Richtung außenliegende Flanschbereiche der Strömungssegmente durch radial außenliegende Enden der Strömungskörperaufnahmen und/oder der Strömungskörper gebildet sind.

Komplementär hierzu ausgebildete Flanschbereiche von Andockstutzen ermöglichen vorzugsweise eine einfache Kontaktierung und/oder Abdichtung.

Günstig kann es sein, wenn jedes Strömungssegment jeweils mehrere Strömungskörper umfasst, welche a) in einer Reihe nebeneinander angeordnet sind und/oder b) parallel zueinander ausgerichtet sind und/oder c) parallel zueinander und unabhängig voneinander mit einem zu reinigenden Rohgasstrom durchströmbar sind.

Symmetrieachsen, insbesondere Rotationsachsen, der kreishohlzylinderförmigen Strömungskörperaufnahmen und/oder der kreiszylinderförmigen Strömungskörper eines jeden Strömungssegments sind vorzugweise zumindest näherungsweise parallel zueinander ausgerichtet.

Vorzugsweise schneiden sich sämtliche Rotationsachsen der Strömungskörperaufnahmen und/oder der Strömungskörper von sämtlichen Strömungssegmenten längs einer gemeinsamen Achse. Diese Achse ist insbesondere eine Rotationsachse der Strömungseinheit.

Ein Strömungssegment umfasst vorzugsweise mehrere Strömungskörper, welche alle in einer einzigen Reihe nebeneinander angeordnet sind. Beispielsweise sind für jedes Strömungssegment mindestens sechs Strömungskörper, insbesondere mindestens zehn Strömungskörper, vorgesehen.

Die Strömungseinheit umfasst oder besteht aus vorzugsweise mindestens sechs, insbesondere mindestens 8, beispielsweise mindestens 10, solcher Strömungssegmente.

Erfindungsgemäß ist vorgesehen, dass die Strömungssegmente zumindest näherungsweise ringförmig angeordnet sind, wobei die Strömungskörper und/oder Strömungskörperaufnahmen zur Aufnahme der Strömungskörper bezüglich einer gemeinsamen Mittelachse und/oder einer gemeinsamen Symmetrieachse der Strömungssegmente in radialer Richtung nach außen von einem Grundkörper des jeweiligen Strömungssegments wegragen.

Die Mittelachse ist insbesondere die Rotationsachse der Strömungseinheit.

Erfindungsgemäß ist ferner vorgesehen, dass jedes Strömungssegment jeweils einen Grundkörper und einen oder mehrere vom Grundkörper wegragende, insbesondere radial nach außen ragende, Strömungskörper und/oder Strömungskörperaufnahmen zur Aufnahme der Strömungskörper umfasst.

Der Grundkörper bildet im Reinigungsmodus der Strömungsvorrichtung vorzugsweise einen Rohgasverteilerkanal eines jeden Strömungssegments.

Der Grundkörper ist insbesondere relativ zu den Strömungskörpern und/oder Strömungskörperaufnahmen radial innenliegend angeordnet.

Der Grundkörper weist vorzugsweise eine Querschnittsform auf, welche der Form eines Kreisringabschnitts entspricht. Der Querschnitt ist dabei insbesondere senkrecht zur Rotationsachse genommen.

Der Grundkörper eines jeden Strömungssegments kann ferner beispielsweise einen Reingassammelkanal zur Zusammenführung und/oder Abführung von Reingas und/oder einen Ascheabführkanal zur Abführung von Asche bilden.

Die Strömungskörper werden im Reinigungsmodus in radialer Richtung von innen nach außen oder von außen nach innen durchströmt.

Der Grundkörper eines jeden Strömungssegments ist vorzugsweise in axialer Richtung einseitig geöffnet.

Vorzugsweise öffnen sich sämtliche Grundkörper sämtlicher Strömungssegmente zu einer gemeinsamen Seite hin, welche insbesondere der Rohgaszuführung zugewandt ist.

Eine oder mehrere Strömungskörperaufnahmen, insbesondere sämtliche Strömungskörperaufnahmen, zur Aufnahme eines oder mehrerer Strömungskörper, umfassen vorzugsweise jeweils einen Flanschbereich, an welchen ein hierzu korrespondierender Flanschbereich der Andockvorrichtung anlegbar, insbesondere direkt damit kontaktierbar, daran anpressbar und/oder abdichtbar, ist.

Günstig kann es sein, wenn die Andockvorrichtung mehrere Andockstutzen umfasst, welche insbesondere relativ zu den Strömungssegmenten bewegbar und an dieselben anpressbar sind.

Die Andockvorrichtung umfasst vorzugsweise eine relativ zu den Strömungssegmenten bewegbare Andockeinheit.

Vorzugsweise umfasst die Andockeinheit einen Hauptkanal sowie mehrere von dem Hauptkanal in Richtung der Strömungskörper eines Strömungssegments von dem Hauptkanal wegragende Andockstutzen.

Die Andockeinheit ist vorzugsweise mittels eines Hebelmechanismus bewegbar, beispielsweise in Richtung eines oder mehrerer Strömungssegmente bewegbar und daran anpressbar.

Die Strömungsvorrichtung umfasst vorzugsweise ein Gehäuse zur Aufnahme der Strömungssegmente.

Die Andockeinheit ist insbesondere innerhalb des Innenraums des Gehäuses angeordnet und/oder darin bewegbar.

Vorzugsweise sind zumindest die Andockstutzen vollständig innerhalb des Innenraums des Gehäuses angeordnet und darin bewegbar.

Die Andockeinheit ist vorzugsweise im Wesentlichen linear in radialer Richtung an die Strömungskörperaufnahmen eines Strömungssegments anpressbar oder in entgegengesetzter Richtung von denselben entfernbar.

Ein oder mehrere zu regenerierende Strömungssegmente sind vorzugsweise mittels der Andockeinheit fluidwirksam von der Rohgaszuführung und der Reingasabführung trennbar und in eine Regenerationsgasführung der Regenerationsvorrichtung einbindbar.

Es kann vorgesehen sein, dass die Andockeinheit zusammen mit einem oder mehreren zu regenerierenden Strömungssegmenten einen Bestandteil einer Regenerationsgasführung der Regenerationsvorrichtung bildet.

Günstig kann es sein, wenn die Strömungsvorrichtung eine Rotorvorrichtung umfasst, mittels welcher die Strömungssegmente relativ zu einem Gehäuse der Strömungsvorrichtung und/oder relativ zu der Andockvorrichtung drehbar aufgenommen, insbesondere gelagert, sind.

Mehrere Strömungssegmente, vorzugsweise alle Strömungssegmente, sind insbesondere gemeinsam miteinander bewegbar, beispielsweise drehbar.

Vorzugsweise ist vorgesehen, dass die Strömungssegmente um eine vertikale Achse drehbar sind.

Die Rotorvorrichtung umfasst vorzugsweise eine Segmentaufnahme zur Aufnahme mehrerer, insbesondere sämtlicher, Strömungssegmente.

Die Segmentaufnahme ist insbesondere ringförmig, hohlzylinderförmig und/oder hohlkegelstumpfförmig ausgebildet.

Vorzugsweise ragen die Strömungssegmente mit radial nach innen verjüngenden Enden der Strömungssegmente in die Segmentaufnahme hinein. Die Strömungssegmente sind hierdurch vorzugsweise sicher in der Segmentaufnahme oder an der Segmentaufnahme festgelegt.

Die Segmentaufnahme ist vorzugsweise über eine zentrale Welle sowie über ein Drehlager drehbar an dem Gehäuse gelagert.

Das Drehlager und die Segmentaufnahme sind vorzugsweise an einander gegenüberliegenden Enden der Strömungssegmente angeordnet. Vorzugsweise erstreckt sich die zentrale Welle längs einer Symmetrieachse oder Rotationsachse der Strömungssegmente über eine gesamte Länge der Strömungssegmente hinweg.

Günstig kann es sein, wenn die Strömungssegmente im Wesentlichen unabhängig voneinander an der Rotorvorrichtung aufgenommen, insbesondere gelagert, sind.

Die Rotorvorrichtung samt der daran angeordneten Strömungssegmente ist vorzugsweise um eine zumindest näherungsweise vertikale Rotationsachse drehbar an dem Gehäuse der Strömungsvorrichtung gelagert.

Günstig kann es sein, wenn die Strömungssegmente zur Kompensation von unterschiedlichen Wärmeausdehnungen in einer oder mehreren Raumrichtungen relativ zueinander bewegbar sind.

Insbesondere sind ein oder mehrere zu regenerierende Strömungssegmente während der Regeneration derselben, insbesondere während der Durchführung des Heizmodus, derart relativ zu den übrigen Strömungssegmenten angeordnet, insbesondere gelagert, dass eine temperaturbedingte Ausdehnung des einen oder der mehreren zu regenerierenden Strömungssegmente keinen oder einen vernachlässigbar geringen Einfluss auf die übrigen Strömungssegmente hat.

Die Strömungssegmente sind insbesondere ringförmig angeordnet und in axialer und/oder radialer Richtung relativ zueinander bewegbar. Ein bei der Regeneration desselben erwärmtes Strömungssegment kann sich dann insbesondere in radialer Richtung nach außen und in einer axialen Richtung, vorzugsweise entgegen der Schwerkraftrichtung nach oben, ausdehnen.

Es kann vorgesehen sein, dass die Strömungssegmente thermisch isoliert voneinander angeordnet sind.

Insbesondere kann vorgesehen sein, dass zwischen zwei benachbart angeordneten Strömungssegmenten eine thermische Trennschicht oder ein oder mehrere thermische Trennelemente angeordnet sind.

Günstig kann es sein, wenn zwischen benachbarten Strömungssegmenten jeweils ein oder mehrere Abstandshalter, insbesondere eine Rippenstruktur, vorgesehen sind, insbesondere zur Vermeidung einer großflächigen Wärmeübertragung zwischen zwei benachbarten Strömungssegmenten.

Vorteilhaft kann es sein, wenn die Regenerationsvorrichtung eine Regenerationsgasführung umfasst, mittels welcher der Heißgasstrom einem oder mehreren zu regenerierenden Strömungssegmenten zuführbar ist.

Vorzugsweise ist der Heißgasstrom mittels der Regenerationsgasführung aus unterschiedlichen Richtungen einem oder mehreren zu regenerierenden Strömungssegmenten zuführbar.

Insbesondere kann vorgesehen sein, dass mittels der Regenerationsgasführung der Heißgasstrom einem oder mehreren zu regenerierenden Strömungssegmenten wahlweise aus voneinander verschiedenen Richtungen zuführbar ist.

Es kann vorgesehen sein, dass die Regenerationsvorrichtung in einen Heizmodus versetzbar ist, in welchem der Heißgasstrom einer Heizvorrichtung, insbesondere einer Brennervorrichtung und/oder einer elektrischen Heizvorrichtung, derart zu einem oder zu mehreren zu regenerierenden Strömungssegmenten zuführbar ist, dass eine Strömungsrichtung in dem einen oder den mehreren zu regenerierenden Strömungssegmenten einer Strömungsrichtung in einem Reinigungsmodus entspricht, in welcher ein zu reinigender Rohgasstrom zur Reinigung desselben durch das eine oder die mehreren Strömungssegmente strömt.

Günstig kann es sein, wenn die Regenerationsvorrichtung in einen Spülmodus versetzbar ist, in welchem der Heißgasstrom einer Heizvorrichtung, insbesondere einer Brennervorrichtung und/oder einer elektrischen Heizvorrichtung, und/oder Spülgas derart zu einem oder zu mehreren zu regenerierenden Strömungssegmenten zuführbar ist, dass eine Strömungsrichtung in dem einen oder den mehreren zu regenerierenden Strömungssegmenten einer Strömungsrichtung in einem Reinigungsmodus entgegengesetzt ist, in welcher ein zu reinigender Rohgasstrom zur Reinigung desselben durch das eine oder die mehreren Strömungssegmente strömt.

Die Regenerationsvorrichtung umfasst vorzugsweise einen Ventilator zum Antreiben des Heißgasstroms.

Ferner kann vorgesehen sein, dass die Regenerationsvorrichtung eine Spülvorrichtung umfasst, insbesondere zur Zuführung von Spülgas, beispielsweise Frischluft, zu der Regenerationsgasführung.

Vorteilhaft kann es sein, wenn der Ventilator bezüglich einer Strömungsrichtung des Heißgasstroms in einem Heizmodus der Regenerationsvorrichtung und/oder bezüglich einer Strömungsrichtung des Heißgasstroms in einem Spülmodus der Regenerationsvorrichtung stromabwärts der Heizvorrichtung und/oder stromabwärts des einen oder der mehreren zu regenerierenden Strömungssegmente angeordnet ist.

Die Strömungsrichtung des Heißgasstroms im Heizmodus einerseits und die Strömungsrichtung des Heißgasstroms im Spülmodus sind vorzugsweise im Bereich des einen oder der mehreren zu regenerierenden Strömungssegmente einander entgegengesetzt.

Vorzugsweise ist die Regenerationsgasführung derart ausgebildet, dass dennoch sowohl im Heizmodus als auch im Spülmodus der Ventilator stromabwärts der Heizvorrichtung und/oder stromabwärts des einen oder der mehreren zu regenerierenden Strömungssegmente angeordnet ist.

Bei einer alternativen Ausgestaltung der Erfindung kann vorgesehen sein, dass der Ventilator bezüglich der Strömungsrichtung des Heißgasstroms und/oder bezüglich eines der Heizvorrichtung zuzuführenden Zuluftstroms stromaufwärts der Heizvorrichtung angeordnet ist.

Vorteilhaft kann es sein, wenn die Regenerationsvorrichtung eine Aufnahmevorrichtung zur Abtrennung und Aufnahme von von dem einen oder den mehreren zu regenerierenden Strömungssegmenten entfernten Verunreinigungen umfasst.

Diese Verunreinigungen sind insbesondere Asche, welche während der Durchführung des Heizmodus in dem einen oder den mehreren zu regenerierenden Strömungssegmenten erzeugt wird und zunächst darin verbleibt und vorzugsweise in dem Spülmodus aus dem einen oder den mehreren zu regenerierenden Strömungssegmenten herausgetragen wird.

Die Aufnahmevorrichtung umfasst vorzugsweise einen Feststoffabscheider, insbesondere einen Zyklon, zur Abscheidung von Verunreinigungen, insbesondere Asche, aus dem Gasstrom, insbesondere Heißgasstrom, mittels welchem die Verunreinigungen, insbesondere die Asche, aus dem einen oder den mehreren zu regenerierenden Strömungssegmenten herausgetragen wurden.

Ferner umfasst die Aufnahmevorrichtung vorzugsweise einen Speicherbehälter zur Speicherung der Verunreinigungen, insbesondere der Asche.

Günstig kann es sein, wenn die Aufnahmevorrichtung eine Zellradschleuse umfasst, welche den Feststoffabscheider von dem Speicherbehälter trennt und insbesondere der gezielten Abführung und Weiterleitung von im Feststoffabscheider abgeschiedenen Verunreinigungen an den Speicherbehälter dient.

Es kann vorgesehen sein, dass die Aufnahmevorrichtung mittels der Regenerationsgasführung mit dem einen oder den mehreren zu regenerierenden Strömungssegmenten und/oder mit einem Ventilator der Regenerationsvorrichtung fluidwirksam verbunden ist.

Bezüglich einer Strömungsrichtung des Heißgasstroms und/oder eines Spülgasstroms ist die Aufnahmevorrichtung vorzugsweise zwischen dem einen oder den mehreren zu regenerierenden Strömungssegmenten einerseits und dem Ventilator der Regenerationsvorrichtung andererseits angeordnet.

Bei einer Ausgestaltung der Erfindung kann vorgesehen sein, dass der Heißgasstrom nach dem Durchströmen des einen oder der mehreren zu regenerierenden Strömungssegmente, nach dem Durchströmen der Aufnahmevorrichtung und/oder nach dem Durchströmen des Ventilators der Rohgaszuführung und/oder der Reingasabführung der Strömungsvorrichtung zuführbar ist.

Die Regenerationsgasführung umfasst vorzugsweise mehrere Leitungen, Ventile, Verzweigungen und/oder Zusammenführungen, welche insbesondere derart angeordnet und/oder ausgebildet sind, dass die vorstehend beschriebenen Verbindungen und Ströme möglich sind.

Ein Strömungskörper ist insbesondere ein Filterkörper, beispielsweise ein sogenannter wall flow filter.

Günstig kann es sein, wenn ein Strömungskörper ein wanddurchströmter Wabenkörper ist.

Ein Strömungskörper umfasst vorzugsweise eine katalytische Beschichtung, so dass im Strömungskörper angeordnete, abgeschiedene und/oder umgewandelte Verunreinigungen bei im Vergleich zu einem normalen Verbrennungsvorgang reduzierter Verbrennungstemperatur chemisch umgesetzt werden können.

Ein Strömungskörper ist insbesondere aus einem Keramikmaterial gebildet und/oder mit einer katalytischen Beschichtung versehen.

Die vorliegende Erfindung betrifft ferner ein Verfahren zum Betreiben einer Strömungsvorrichtung.

Der Erfindung liegt diesbezüglich die Aufgabe zugrunde, ein Verfahren bereitzustellen, welches einfach, zuverlässig und energieeffizient durchführbar ist.

Diese Aufgabe wird erfindungsgemäß durch ein Verfahren zum Betreiben einer Strömungsvorrichtung, insbesondere zum Abscheiden von Rußpartikeln aus Verbrennungsabgas, mit den Merkmalen des Anspruchs 17 gelöst.

Das erfindungsgemäße Verfahren weist vorzugsweise einzelne oder mehrere der im Zusammenhang mit der erfindungsgemäßen Strömungsvorrichtung beschriebenen Merkmale und/oder Vorteile auf.

Günstig kann es sein, wenn das eine oder die mehreren zu regenerierenden Strömungssegmente mittels der Andockvorrichtung funktional und/oder fluidwirksam von den übrigen Strömungssegmenten entkoppelt und/oder mittels der Regenerationsvorrichtung regeneriert werden, während die übrigen Strömungssegmente weiterhin in einem Reinigungsmodus zum Entfernen von Verunreinigungen aus dem Rohgasstrom genutzt werden.

Die Strömungssegmente sind vorzugsweise einzeln nacheinander mittels der Regenerationsvorrichtung regenerierbar.

Ein Gehäuse der Strömungsvorrichtung ist vorzugsweise zu einer Umgebung hin hermetisch abgedichtet. Insbesondere sind vorzugsweise sämtliche bewegbaren Bauteile und/oder Leitungen und/oder Zuführungen mittels eines oder mehrerer metallischer Faltenbälge an einer Gehäusewandung des Gehäuses elastisch nachgiebig festgelegt. Hierdurch können insbesondere thermische Ausdehnungsänderungen zuverlässig kompensiert werden, ohne eine Dichtheit des Gehäuses zu beeinträchtigen.

Die Bewegungsvorrichtung zur Bewegung der Strömungssegmente, insbesondere der Rotorvorrichtung, kann beispielsweise einen Rätschenantrieb umfassen. Die Rotorvorrichtung samt der daran angeordneten Strömungssegmente ist dann vorzugsweise mittels einer Linearbewegung von außerhalb des Filtergehäuses antreibbar.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Ausführungsform einer Strömungsvorrichtung, wobei ein Gehäuse der Strömungsvorrichtung zur Illustration der darin enthaltenen Komponenten transparent dargestellt ist;
- Fig. 2: eine schematische Seitenansicht der Strömungsvorrichtung aus Fig. 1;
- Fig. 3: eine schematische Explosionsdarstellung der Strömungsvorrichtung aus Fig. 1;
- Fig. 4: eine schematische Darstellung einer Rotorvorrichtung der Strömungsvorrichtung samt an der Rotorvorrichtung angeordneter Strömungssegmente der Strömungsvorrichtung;
- Fig. 5: eine vergrößerte Darstellung des Bereichs V in Fig. 2, wobei eine Andockvorrichtung von einem zu regenerierenden Strömungssegment beabstandet ist;
- Fig. 6: eine der Fig. 5 entsprechende schematische Darstellung des Bereichs V in Fig. 2, wobei die Andockvorrichtung an einem zu regenerierenden Strömungssegment angedockt ist;
- Fig. 7: einen schematischen Schnitt durch die Strömungsvorrichtung aus Fig. 1 zur Illustration der Funktionsweise der Strömungsvorrichtung, wobei die Strömungsvorrichtung in einem Reinigungsmodus betrieben wird;
- Fig. 8: eine der Fig. 7 entsprechende Schnittdarstellung der Strömungsvorrichtung aus Fig. 1, wobei die Strömungsvorrichtung in einem Heizmodus betrieben wird;
- Fig. 9: eine der Fig. 7 entsprechende Schnittdarstellung der Strömungsvorrichtung aus Fig. 1, wobei die Strömungsvorrichtung in einem Spülmodus betrieben wird.

Gleiche oder funktional äquivalente Elemente sind in sämtlichen Figuren mit denselben Bezugszeichen versehen.

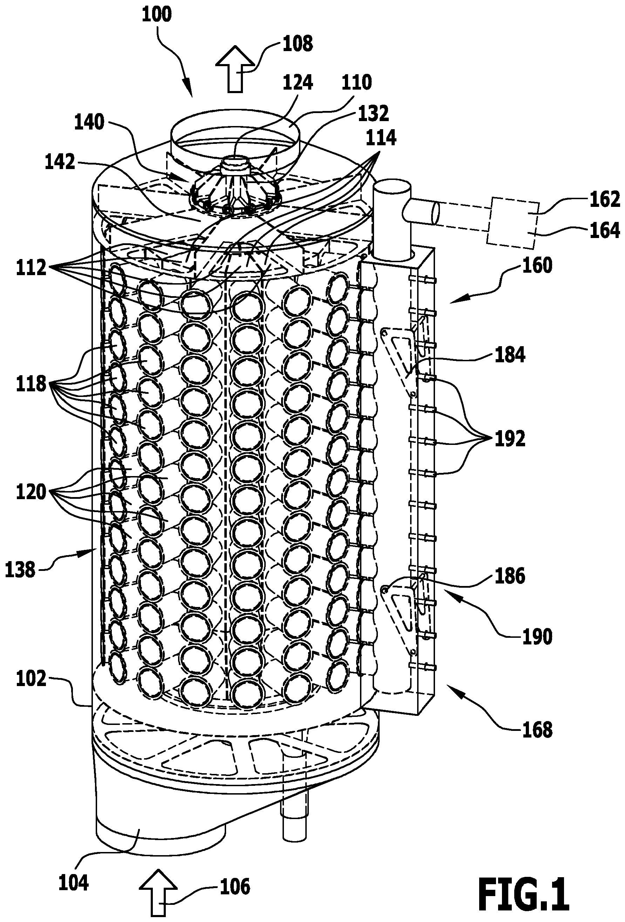

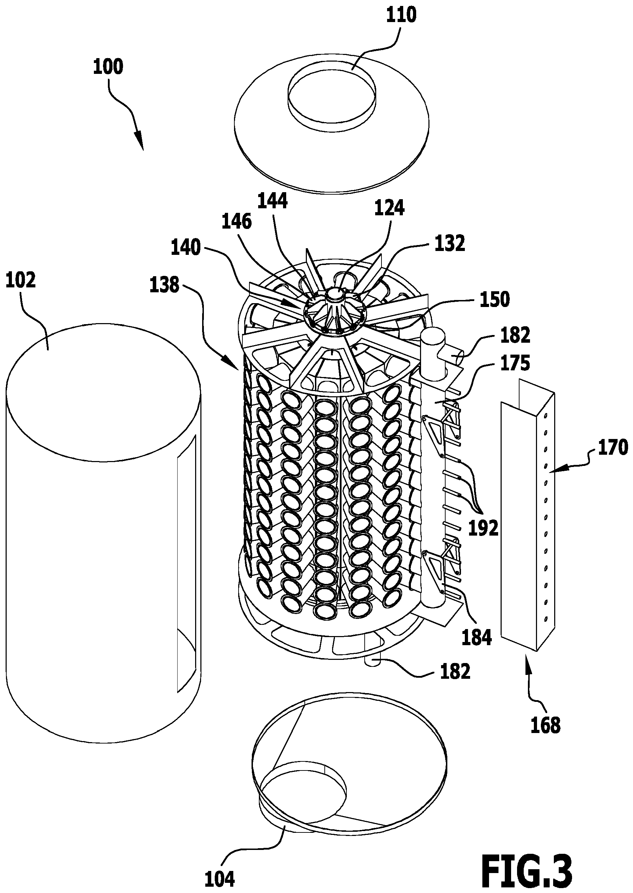

Eine in den Fig. 1 bis 9 dargestellte Ausführungsform einer als Ganzes mit 100 bezeichneten Strömungsvorrichtung kommt beispielsweise als Bestandteil einer Abgasreinigungsanlage eines Verbrennungsmotors zum Einsatz.

Die Strömungsvorrichtung 100 eignet sich dabei insbesondere zur Verwendung an oder in Kombination mit einem Dieselmotor, beispielsweise einem Schweröldieselmotor.

Die Strömungsvorrichtung 100 kann insbesondere in stationären Anwendungen oder in mobilen Anwendungen zum Einsatz kommen.

Insbesondere kann eine Verwendung der Strömungsvorrichtung 100 im Abgasstrang eines Schiffsmotors, welcher mit Schweröl betrieben wird, vorgesehen sein. Ferner eignet sich die Strömungsvorrichtung 100 vorzugsweise für sonstige Verbrennungsmotoren, welche beispielsweise mit feststoffbelasteten Brennstoffen und/oder feststoffbelasteten Schmierstoffen betrieben werden.

Die Strömungsvorrichtung 100 umfasst ein Gehäuse 102, welchem über eine Rohgaszuführung 104 ein Rohgasstrom 106 zuführbar ist.

Der Rohgasstrom 106 ist insbesondere innerhalb des Gehäuses 102 reinigbar, wodurch ein Reingasstrom 108 erhältlich ist.

Der Reingasstrom 108 ist insbesondere über eine Reingasabführung 110 aus dem Gehäuse 102 abführbar.

Zur Reinigung des Rohgasstroms 106 umfasst die Strömungsvorrichtung 100 mehrere Strömungssegmente 112, beispielsweise 10, 12, 14 oder 16 Strömungssegmente 112.

Die Strömungssegmente 112 sind insbesondere im Wesentlichen kreiszylinderförmig und/oder kreisringförmig angeordnet.

Jedes Strömungssegment 112 umfasst vorzugsweise einen Grundkörper 114.

Die Grundkörper 114 der Strömungssegmente 112 sind insbesondere im Querschnitt jeweils kreisringabschnittsförmig ausgebildet und ergänzen sich zusammen zu einem vollständig geschlossenen Kreisring.

Die Grundkörper 114 der Strömungssegmente 112 sind dabei insbesondere symmetrisch um eine Symmetrieachse 116 angeordnet.

Jedes Strömungssegment 112 umfasst vorzugsweise mehrere Strömungskörper 118, welche in Strömungskörperaufnahmen 120 angeordnet sind.

Die Strömungskörperaufnahmen 120 sind an den Grundkörpern 114 eines jeden Strömungssegments 112 festgelegt und ragen insbesondere von dem jeweiligen Grundkörper 114 weg.

Insbesondere sind die Strömungskörperaufnahmen 120 vorzugsweise derart an den Grundkörpern 114 angeordnet, dass diese bezüglich der Symmetrieachse 116 in einer radialen Richtung 122 von den Grundkörpern 114 nach außen wegragen.

Die Strömungskörperaufnahmen 120 sind insbesondere im Wesentlichen hohlkreiszylinderförmig ausgebildet.

Die Strömungskörper 118 füllen die Strömungskörperaufnahmen 120 vorzugsweise im Wesentlichen vollständig aus und sind insbesondere im Wesentlichen komplementär zu den Innenräumen der Strömungskörperaufnahmen 120 ausgebildet.

Die Strömungskörper 118 sind somit insbesondere kreiszylindrisch ausgebildet.

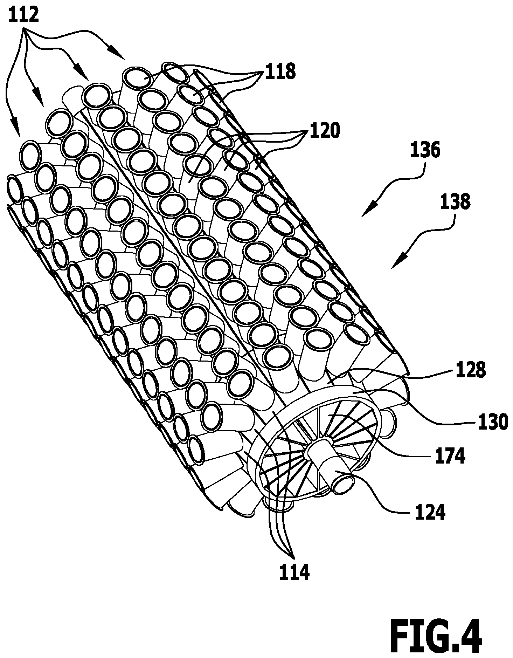

Wie insbesondere Fig. 4 zu entnehmen ist, sind die Strömungssegmente 112 symmetrisch um eine zentrale Welle 124 angeordnet und relativ zu derselben festgelegt.

Insbesondere sind die Grundkörper 114 der Strömungssegmente 112 mit einem in einer axialen Richtung 126 verjüngenden Ende 128 versehen, wobei das jeweilige verjüngende Ende 128 eines jeden Grundkörpers 114 in eine Segmentaufnahme 130 hineinragt und dadurch in einer gewünschten Position gehalten wird.

Die Segmentaufnahme 130 ist insbesondere an der zentralen Welle 124 angeordnet, beispielsweise drehfest festgelegt.

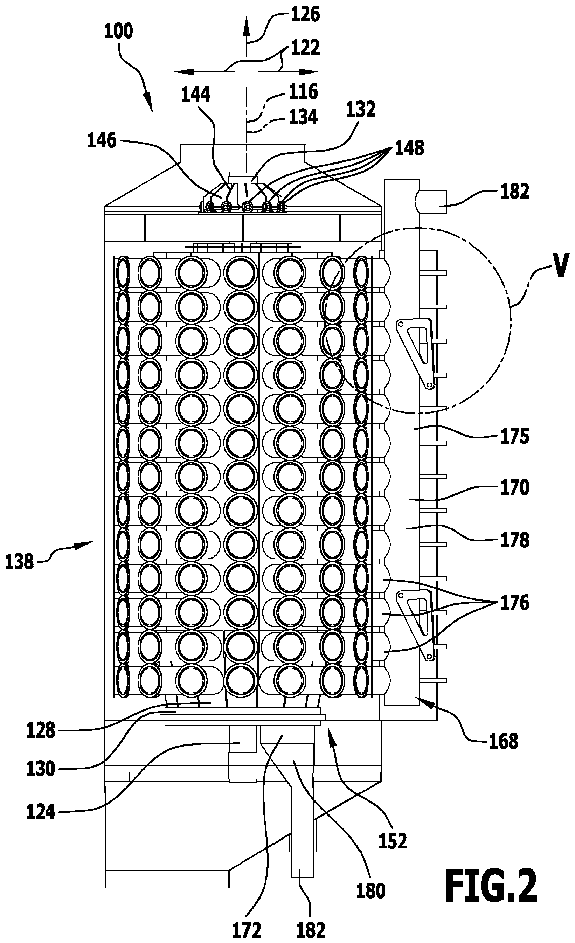

Wie insbesondere Fig. 2 zu entnehmen ist, ist an einem der Segmentaufnahme 130 gegenüberliegenden Ende der zentralen Welle 124 ein Drehlager 132 vorgesehen.

Mittels dieses Drehlagers 132 sind die zentrale Welle 124, die Segmentaufnahme 130 und die Strömungssegmente 112 vorzugsweise um die Symmetrieachse 116 drehbar an dem Gehäuse 102 gelagert.

Die Symmetrieachse 116 ist somit insbesondere auch eine Rotationsachse 134.

Die drehbar an dem Gehäuse 102 gelagerten Bauteile der Strömungsvorrichtung 100 werden insbesondere zusammen als Rotorvorrichtung 136 bezeichnet.

Die Gesamtheit der Strömungssegmente 112 ist insbesondere eine Strömungseinheit 138.

Die Strömungsvorrichtung 100 umfasst ferner vorzugsweise eine Bewegungsvorrichtung 140 zur Bewegung, insbesondere Drehung, der Rotorvorrichtung 136 innerhalb des Gehäuses 102.

Die Bewegungsvorrichtung 140 kann hierfür insbesondere eine (nicht dargestellte) Antriebsvorrichtung umfassen.

Mittels der Bewegungsvorrichtung 140 ist die Rotorvorrichtung 136 insbesondere schrittweise um die Rotationsachse 134 drehbar.

Die Strömungssegmente 112 sind hierdurch insbesondere schrittweise nacheinander relativ zu einer noch zu beschreibenden Regenerationsvorrichtung positionierbar.

Wie den Fig. 1 bis 3 ferner zu entnehmen ist, umfasst die Strömungsvorrichtung 100 einen oberen Lagerring 142, an welchem das Drehlager 132 drehbar gelagert ist.

Insbesondere umfasst das Drehlager 132 einen Lagerstern 144, welcher aus mehreren in radialer Richtung 122 nach außen vorstehenden Vorsprüngen 146 besteht. An den Vorsprüngen 146 sind Lagerrollen 148 angeordnet, welche kreisförmig längs eines kreisringförmigen Abrollpfads 150 auf dem oberen Lagerring 142 abrollen können.

Die Strömungsvorrichtung 100 umfasst ferner einen unteren Lagerring 152, welcher vorzugsweise lediglich zur seitlichen Stabilisierung und/oder Führung der Rotorvorrichtung 136 dient.

Der untere Lagerring 152 nimmt vorzugsweise keine Gewichtskräfte der Rotorvorrichtung 136 auf.

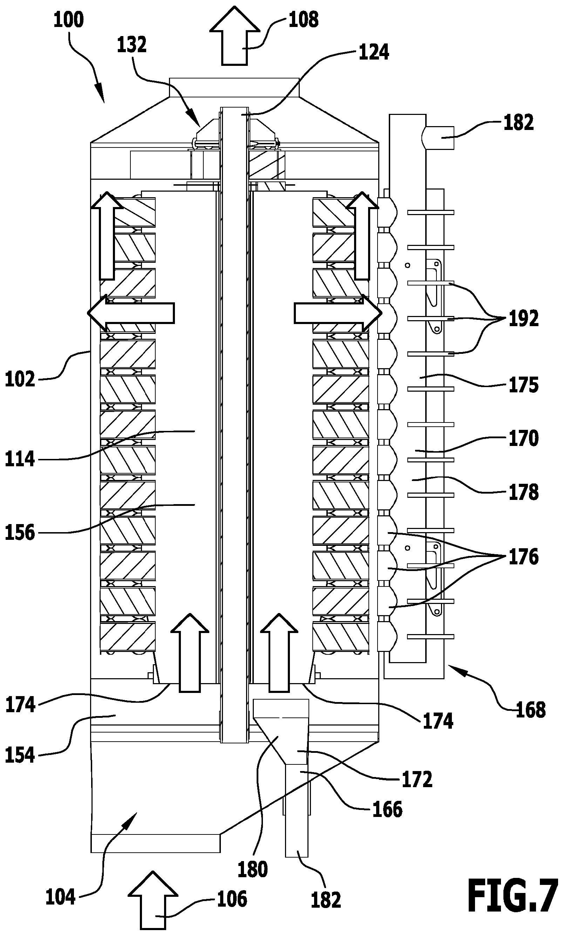

Die Strömungsvorrichtung 100 ist insbesondere in dem in Fig. 7 dargestellten Reinigungsmodus betreibbar.

In diesem Reinigungsmodus wird der Rohgasstrom 106 in einen Innenraum 154 des Gehäuses 102 eingeleitet.

Mittels der Rohgaszuführung 104 wird der Rohgasstrom 106 dabei in die Grundkörper 114 der Strömungssegmente 112 eingeleitet, welche hierzu an dem bezüglich der Schwerkraftrichtung unteren Ende geöffnet ausgebildet sind.

Der Rohgasstrom 106 wird mittels der Grundkörper 114 auf die Strömungskörper 118 in den Strömungskörperaufnahmen 120 verteilt.

Die Grundkörper 114 bilden somit insbesondere Rohgasverteilerkanäle 156.

Die Strömungskörper 118 werden in radialer Richtung 122 von innen nach außen mit dem Rohgasstrom 106 durchströmt.

Im Rohgasstrom 106 enthaltene Verunreinigungen, insbesondere Rußpartikel, werden hierdurch in den Strömungskörpern 118 abgeschieden und/oder umgewandelt.

Ein aus den Strömungskörpern 118 ausströmender Gasstrom ist folglich ein gereinigter Gasstrom, insbesondere der Reingasstrom 108.

Der Reingasstrom 108 wird insbesondere bezüglich der radialen Richtung 122 außen an den Strömungssegmenten 112 und/oder zwischen den Strömungssegmenten 112 entlanggeführt und über die Reingasabführung 110 aus dem Gehäuse 102 abgeführt.

Aufgrund der kontinuierlichen Entfernung von Verunreinigungen ergibt sich nach einem längeren Betrieb der Strömungsvorrichtung 100 eine zunehmende Beladung der Strömungskörper 118 mit Verunreinigungen, insbesondere Ruß. Die Strömungskörper 118 müssen folglich regelmäßig regeneriert werden, um einen kontinuierlichen und zuverlässigen Betrieb der Strömungsvorrichtung 100 zu ermöglichen.

Für diese Regeneration umfasst die Strömungsvorrichtung 100 eine Regenerationsvorrichtung 160.

Die Regenerationsvorrichtung 160 umfasst insbesondere eine Heizvorrichtung 162 und/oder eine Spülvorrichtung 164.

Ferner umfasst die Regenerationsvorrichtung 160 eine Regenerationsgasführung 166.

Die Regenerationsvorrichtung 160 umfasst vorzugsweise eine Andockvorrichtung 168, welche zur Regeneration eines Strömungssegments 112 an dasselbe angedockt werden kann.

Das zu regenerierende Strömungssegment 112 wird hierdurch fluidwirksam von dem Innenraum 154, der Rohgaszuführung 104 und/oder der Reingasabführung 110 getrennt und ist dann ein Teil, insbesondere ein Abschnitt, der Regenerationsgasführung 166.

Die Andockvorrichtung 168 umfasst hierzu eine Andockeinheit 170, welche insbesondere an die Strömungskörperaufnahmen 120 des zu regenerierenden Strömungssegments 112 anlegbar, vorzugsweise anpressbar, ist.

Die Andockvorrichtung 168 umfasst ferner vorzugsweise eine weitere Andockeinheit 172, welche vorzugsweise an ein offenes Ende 174 eines Grundkörpers 114 eines Strömungssegments 112 andockbar ist.

Das offene Ende 174 ist insbesondere das verjüngende Ende 128.

Die an die Strömungskörperaufnahmen 120 andockbare Andockeinheit 170 umfasst vorzugsweise einen Hauptkanal 175, welcher sich parallel zur axialen Richtung 126 erstreckt und mehrere längs der axialen Richtung 126 aufeinanderfolgende Andockstutzen 176 umfasst.

Die Andockstutzen 176 ragen insbesondere in radialer Richtung 122 nach innen von dem Hauptkanal 175 weg.

Die Andockstutzen 176 sind insbesondere zumindest abschnittsweise komplementär zu den Strömungskörperaufnahmen 120 ausgebildet, um eine zuverlässige Anlage und/oder Abdichtung zwischen dem zu regenerierenden Strömungssegment 112 und der Andockeinheit 170 zu ermöglichen.

Der Hauptkanal 175 kann beispielsweise auch als Ausblasrohr 178 bezeichnet werden.

Die Andockeinheit 172, welche an das offene Ende 174 des Grundkörpers 114 des zu regenerierenden Strömungssegments 112 andockbar ist, umfasst vorzugsweise einen Auffangtrichter 180.

Sowohl der Auffangtrichter 180 als auch der Hauptkanal 175 sind jeweils mittels eines Anschlussstutzens 182 an den (nicht dargestellten) restlichen Teil der Regenerationsgasführung 166 anschließbar.

Die Andockelemente 170, 172 sind insbesondere linear verschiebbar angeordnet, um das Andocken zu ermöglichen.

Die Andockeinheit 170 ist dabei insbesondere in radialer Richtung 122 nach innen oder nach außen bewegbar. Hierzu sind insbesondere eine oder mehrere Schwenkelemente 184 zur schwenkbaren und/oder linear verfahrbaren Lagerung des Hauptkanals 175 an dem Gehäuse 102 der Strömungsvorrichtung 100 vorgesehen.

Die weitere Andockeinheit 172 ist insbesondere parallel zur axialen Richtung 126 linear verschiebbar an dem Gehäuse 102 gelagert, um die Andockeinheit 172 wahlweise an das offene Ende 174 des Grundkörpers 114 des zu regenerierenden Strömungssegments 112 anpressen oder von demselben entfernen zu können.

Mittels eines oder mehrere Schiebelager 186 kann vorzugsweise insbesondere eine temperaturbedingte Ausdehnung der bewegbaren oder sonstigen Komponenten der Strömungsvorrichtung 100, insbesondere der Andockeinheiten 170, 172, kompensiert werden.

Die Andockeinheiten 170, 172 und/oder die Strömungssegmente 112, insbesondere die Strömungskörperaufnahmen 120, die Andockstutzen 176 etc., weisen vorzugsweise jeweils einen Flanschbereich 188 zur zuverlässigen Anlage und Abdichtung auf.

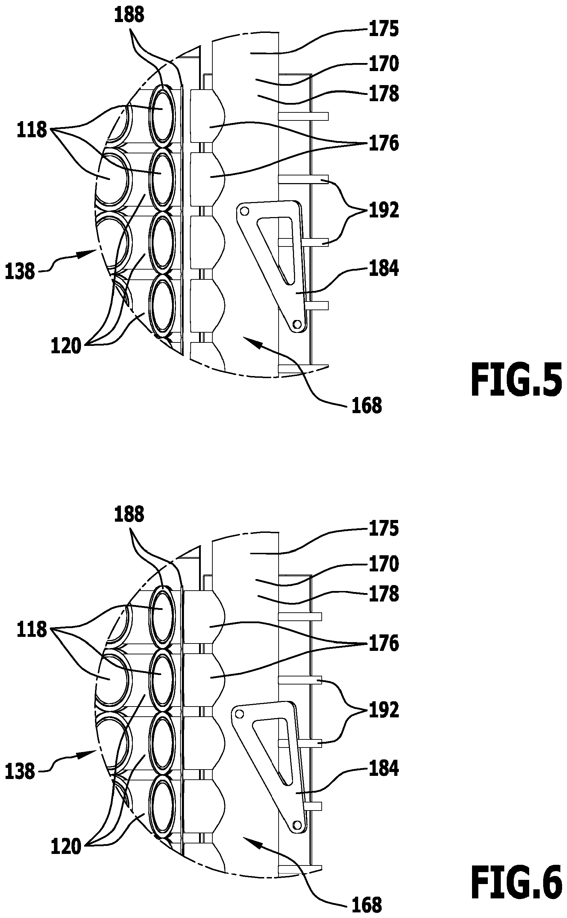

Wie insbesondere den Fig. 5 und 6 zu entnehmen ist, können die Flanschbereiche 188 beispielsweise durch die Bewegung der Andockeinheit 170 passend aneinander zur Anlage gebracht werden, um eine Dichtwirkung zu optimieren.

Im Betrieb der Strömungsvorrichtung 100 werden die Strömungssegmente 112 vorzugsweise stets einzeln nacheinander regeneriert.

Die Strömungsvorrichtung 100 kann hierdurch trotz einer laufenden Regeneration eines Strömungssegments 112 weiter zur Reinigung des Rohgasstroms 106 genutzt werden.

Insbesondere wird vorzugsweise jeweils nur ein Strömungssegment 112 regeneriert, während sämtliche anderen Strömungssegmente 112 zur Entfernung von Verunreinigungen aus dem Rohgasstrom 106 genutzt werden.

Der Regenerationsvorgang läuft vorzugsweise wie folgt ab:
Zunächst wird ein zu regenerierendes Strömungssegment 112 durch Drehung der gesamten Strömungseinheit 138 und/oder Rotorvorrichtung 136 in eine Regenerationsposition gebracht, in welcher das zu regenerierende Strömungssegment 112 in radialer Richtung 122 unmittelbar vor der Andockeinheit 170 der Andockvorrichtung 168 angeordnet ist.

Die Andockeinheiten 170, 172 werden dann auf das Strömungssegment 112 zubewegt. Die Strömungskörperaufnahmen 120 des zu regenerierenden Strömungssegments 112 werden hierdurch von den Andockstutzen 176 abgedeckt. Das offene Ende 174 des Grundkörpers 114 des zu regenerierenden Strömungssegments 112 wird hierdurch von der Andockeinheit 172 abgedeckt.

Die Durchströmung des zu regenerierenden Strömungssegments 112 mit dem Rohgasstrom 106 wird hierdurch unterbrochen.

Vielmehr kann das zu regenerierende Strömungssegment 112 nun mit einem Gas aus der Regenerationsgasführung 166 beaufschlagt werden.

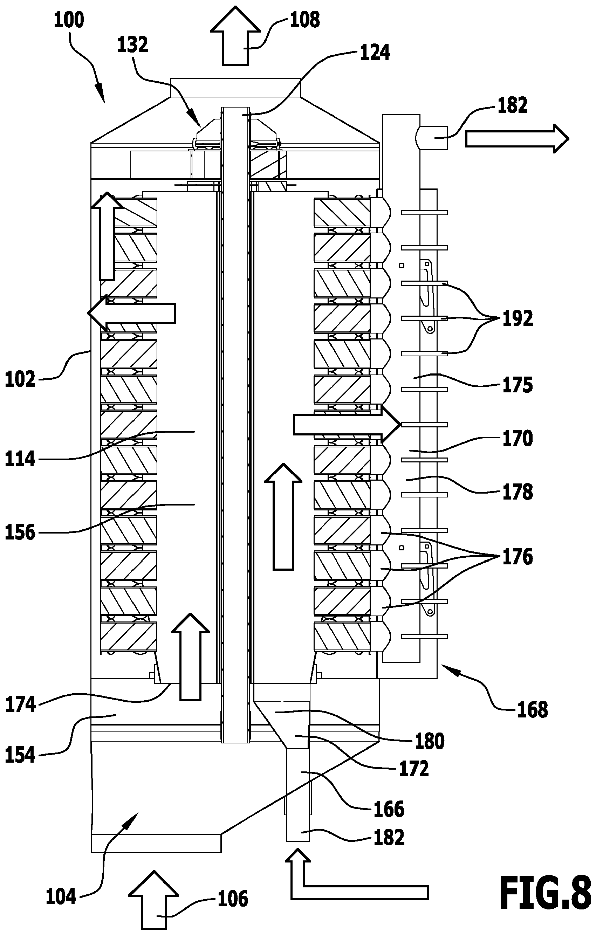

Mittels der Regenerationsvorrichtung 160, insbesondere mittels der Heizvorrichtung 162, wird gemäß der in Fig. 8 dargestellten Illustration eines Heizmodus ein Heißgasstrom erzeugt und durch das zu regenerierende Strömungssegment 112 hindurchgeführt.

Der Heißgasstrom tritt dabei durch das offene Ende 174 in den Grundkörper 114 des Strömungssegments 112 ein und wird auf die Strömungskörperaufnahmen 120 und die darin angeordneten Strömungskörper 118 verteilt.

Der Heißgasstrom durchströmt die Strömungskörper 118 und erhitzt diese dabei.

Insbesondere werden hierdurch in den Strömungskörpern 118 enthaltene Verunreinigungen so stark erhitzt, dass diese chemisch umgewandelt werden, insbesondere verbrannt werden.

Die Strömungskörper 118 sind vorzugsweise mit einer katalytischen Beschichtung versehen, um eine chemische Umsetzung der Verunreinigungen zu erleichtern.

Der Heizmodus wird aufrechterhalten, bis zumindest ein Großteil der in den Strömungskörpern 118 enthaltenen Verunreinigungen verbrannt wurde.

In den Strömungskörpern 118 verbleibt dann ein Rest der Verunreinigungen, insbesondere Asche, welche auch durch ein weiteres Erhitzen nicht beseitigt werden könnte.

Diese Asche wird folglich anderweitig aus den Strömungskörpern 118 entfernt.

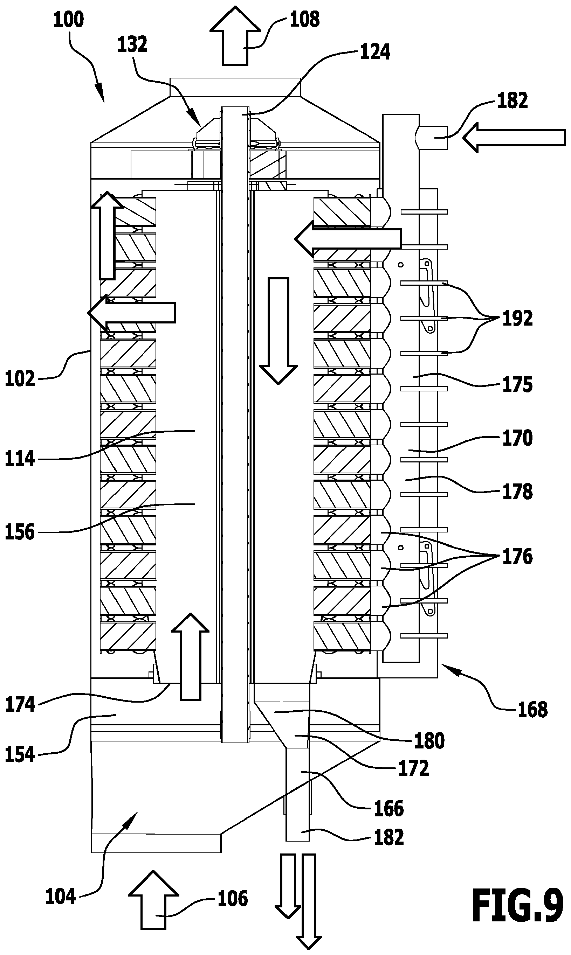

Insbesondere wird hierdurch ein in Fig. 9 illustrierter Spülmodus aktiviert.

In diesem Spülmodus wird eine Strömungsrichtung eines durch die Strömungskörper 118 strömenden Gasstroms umgekehrt.

Der Gasstrom kann dabei einerseits der Heißgasstrom sein.

Alternativ oder ergänzend hierzu kann ein Spülgasstrom, insbesondere bereitgestellt durch eine Spülvorrichtung 164, genutzt werden.

Aufgrund der umgekehrten Strömungsrichtung werden die Verunreinigungen aus den Strömungskörpern 118 ausgetragen und insbesondere zunächst in den Grundkörper 114 des zu regenerierenden Strömungssegments 112 transportiert. Über die Andockeinheit 172, insbesondere den Auffangtrichter 180, werden die Verunreinigungen schließlich aus dem Grundkörper 114 und somit aus dem gesamten Strömungssegment 112 abgeführt.

Die Symmetrieachse 116 und folglich auch die Rotationsachse 134 sind vorzugsweise im Wesentlichen vertikal ausgerichtet.

Das offene Ende 174 des Grundkörpers 114 des zu regenerierenden Strömungssegments 112 ist vorzugsweise an einem bezüglich der Schwerkraftrichtung unteren Ende des Strömungssegments 112 angeordnet.

Hierdurch kann eine vereinfachte Entfernung der herausgespülten Verunreinigungen erzielt werden, da diese aufgrund der Schwerkraft nach unten fallen und über den Auffangtrichter 180 abgeführt werden können.

Insbesondere zur Abreinigung von festsitzenden Verunreinigungen aus den Strömungskörpern 118 kann eine zusätzliche Lockerungsvorrichtung 190 vorgesehen sein.

Die Lockerungsvorrichtung 190 umfasst beispielsweise eine Druckpulsvorrichtung, welche insbesondere mehrere Pulsrohre 192 umfasst.

Die Pulsrohre 192 sind insbesondere Bestandteil der Andockeinheit 170 und ragen vorzugsweise in den Hauptkanal 175 und/oder die Andockstutzen 176 hinein.

Insbesondere sind die Pulsrohre 192 vorzugsweise auf die Strömungskörper 118 gerichtet, wenn die Andockvorrichtung 168 an einem zu regenerierenden Strömungssegment 112 angedockt ist.

Mittels der Pulsrohre 192 kann insbesondere ein Druckpuls auf die Strömungskörper 118 appliziert werden, um die darin enthaltenen Verunreinigungen zu lockern und letztlich aus den Strömungskörpern 118 zu entfernen.

Alternativ oder ergänzend zu einer solchen Druckpulsreinigung kann beispielsweise eine Reinigung mittels Schallwellen, insbesondere mittels einer Resonatorvorrichtung, vorgesehen sein. Eine solche Resonatorvorrichtung ist insbesondere in den Hauptkanal 175 integriert, um darin beispielsweise eine stehende Schallwelle zu erzeugen, wodurch ebenfalls eine Lockerung der Verunreinigungen in den Strömungskörpern 118 erzielt werden kann.

Nach erfolgter Regeneration eines Strömungssegments 112 wird die Andockvorrichtung 168 von diesem Strömungssegment 112 entfernt.

Mittels der Bewegungsvorrichtung 140 wird anschließend die Strömungseinheit 138 und/oder die Rotorvorrichtung 136 weitergedreht, um ein weiteres Strömungssegment 112 in die Regenerationsposition zu bringen und mittels der Regenerationsvorrichtung 160 zu regenerieren.

Letztlich können auf diese Weise reihum sämtliche Strömungssegmente 112 nacheinander regeneriert werden.

Abhängig von der gewählten Gesamtzahl der Strömungssegmente 112 wird vorzugsweise stets nur ein geringer Bruchteil der Strömungskörper 118 zu einem gewissen Zeitpunkt regeneriert, so dass stets ein Großteil der Strömungskörper 118 kontinuierlich zur Reinigung des Rohgasstroms 106 zur Verfügung steht.

Insbesondere dann, wenn die Strömungsvorrichtung 100 bei großen Schiffsmotoren zum Einsatz kommt, können durch die gewählte Ausgestaltung der Strömungsvorrichtung 100 trotz eines verhältnismäßig großen Abscheidevolumens eine platzsparende Anordnung sowie ein einfacher Aufbau und ein zuverlässiger Betrieb ermöglicht werden.

## Patentansprüche

1. Strömungsvorrichtung (100) zum Entfernen von Verunreinigungen aus einem Rohgasstrom (106), insbesondere zum Abscheiden von Rußpartikeln aus Verbrennungsabgas, wobei die Strömungsvorrichtung (100) Folgendes umfasst:
mehrere Strömungssegmente (112), welche jeweils einen oder mehrere Strömungskörper (118) aufweisen und zum Entfernen von Verunreinigungen in einem Reinigungsmodus mit dem Rohgasstrom (106) durchströmbar sind, wobei über eine Rohgaszuführung (104) der Rohgasstrom (106) zu den Strömungssegmenten (112) zuführbar ist und wobei ein mittels der Strömungssegmente (112) gereinigter Reingasstrom (108) mittels einer Reingasabführung (110) von den Strömungssegmenten (112) abführbar ist;
eine Regenerationsvorrichtung (160) zum Regenerieren der Strömungssegmente (112), wobei die Regenerationsvorrichtung (160) eine Andockvorrichtung (168) zur Herstellung einer temporären Verbindung zwischen einem oder mehreren zu regenerierenden Strömungssegmenten (112) einerseits und einer Heizvorrichtung (162) und/oder einer Spülvorrichtung (164) der Regenerationsvorrichtung (160) andererseits umfasst, **dadurch gekennzeichnet, dass** die Strömungskörper (118) im Reinigungsmodus in radialer Richtung von innen nach außen durchströmbar sind, wobei die Strömungssegmente (112) zumindest näherungsweise ringförmig angeordnet sind, wobei die Strömungskörper (118) und/oder Strömungskörperaufnahmen (120) zur Aufnahme der Strömungskörper (118) bezüglich einer gemeinsamen Mittelachse und/oder einer gemeinsamen Symmetrieachse (116) der Strömungssegmente (112) in radialer Richtung (122) nach außen von einem Grundkörper (114) des jeweiligen Strömungssegments (112) wegragen, und wobei jedes Strömungssegment (112) jeweils einen Grundkörper (114) und einen oder mehrere von dem Grundkörper (114) wegragende, insbesondere radial nach außen ragende, Strömungskörper (118) und/oder Strömungskörperaufnahmen (120) zur Aufnahme der Strömungskörper (118) umfasst.

2. Strömungsvorrichtung (100) nach Anspruch 1, **dadurch gekennzeichnet, dass** die Strömungsvorrichtung (100) eine Abscheidevorrichtung ist, dass die Strömungssegmente (112) Abscheidesegmente sind und dass die Strömungskörper (118) Abscheidekörper sind.

3. Strömungsvorrichtung (100) nach einem der Ansprüche 1 oder 2, **dadurch gekennzeichnet, dass** die Strömungsvorrichtung (100) eine Bewegungsvorrichtung (140) zur Bewegung der Andockvorrichtung (168) und/oder der Strömungssegmente (112) derart umfasst, dass die Andockvorrichtung (168) wahlweise an unterschiedliche Strömungssegmente (112) andockbar ist, wobei vorzugsweise ferner vorgesehen ist, dass die Strömungssegmente (112) mittels der Bewegungsvorrichtung (140) in eine Drehbewegung versetzbar sind.

4. Strömungsvorrichtung (100) nach einem der Ansprüche 1 bis 3, **dadurch gekennzeichnet, dass** die Strömungssegmente (112) jeweils für sich genommen zumindest näherungsweise kreiszylindersegmentförmig ausgebildet sind und/oder dass die Strömungssegmente (112) zusammen eine zumindest näherungsweise kreiszylinderförmige Strömungseinheit (138) bilden.

5. Strömungsvorrichtung (100) nach einem der Ansprüche 1 bis 4, **dadurch gekennzeichnet, dass** jedes Strömungssegment (112) jeweils mehrere Strömungskörper (118) umfasst, welche in voneinander verschiedenen und/oder räumlich voneinander getrennten Strömungskörperaufnahmen (120) des jeweiligen Strömungssegments (112) aufgenommen sind.

6. Strömungsvorrichtung (100) nach einem der Ansprüche 1 bis 5, **dadurch gekennzeichnet, dass** jedes Strömungssegment (112) jeweils mehrere Strömungskörper (118) umfasst, welche
a) in einer Reihe nebeneinander angeordnet sind und/oder
b) parallel zueinander ausgerichtet sind und/oder
c) parallel zueinander und unabhängig voneinander mit einem zu reinigenden Rohgasstrom (106) durchströmbar sind.

7. Strömungsvorrichtung (100) nach einem der Ansprüche 1 bis 6, **dadurch gekennzeichnet, dass** der Grundkörper (114) im Reinigungsmodus der Strömungsvorrichtung (100) einen Rohgasverteilerkanal (156) eines jeden Strömungssegments (112) bildet.

8. Strömungsvorrichtung (100) nach einem der Ansprüche 1 bis 7, **dadurch gekennzeichnet, dass** eine oder mehrere Strömungskörperaufnahmen (120) zur Aufnahme eines oder mehrerer Strömungskörper (118) eines jeden Strömungssegments (112) jeweils einen Flanschbereich (188) umfassen, an welchen ein hierzu korrespondierender Flanschbereich (188) der Andockvorrichtung (168) anlegbar ist.

9. Strömungsvorrichtung (100) nach einem der Ansprüche 1 bis 8, **dadurch gekennzeichnet, dass** die Andockvorrichtung (168) mehrere Andockstutzen (176) umfasst, welche insbesondere relativ zu den Strömungssegmenten (112) bewegbar und an dieselben anpressbar sind.

10. Strömungsvorrichtung (100) nach einem der Ansprüche 1 bis 9, **dadurch gekennzeichnet, dass** die Andockvorrichtung (168) eine relativ zu den Strömungssegmenten (112) bewegbare Andockeinheit (170) umfasst, welche einen Hauptkanal (175) sowie mehrere von dem Hauptkanal (175) in Richtung der Strömungskörper (118) der Strömungssegmente (112) von dem Hauptkanal (175) wegragende Andockstutzen (176) umfasst.

11. Strömungsvorrichtung (100) nach einem der Ansprüche 1 bis 10, **dadurch gekennzeichnet, dass** ein oder mehrere zu regenerierende Strömungssegmente (112) mittels der Andockeinheit (172) fluidwirksam von der Rohgaszuführung (104) und der Reingasabführung (110) trennbar und in eine Regenerationsgasführung (166) der Regenerationsvorrichtung (160) einbindbar sind.

12. Strömungsvorrichtung (100) nach einem der Ansprüche 1 bis 11, **dadurch gekennzeichnet, dass** die Strömungsvorrichtung (100) eine Rotorvorrichtung (136) umfasst, mittels welcher die Strömungssegmente (112) relativ zu einem Gehäuse (102) der Strömungsvorrichtung (100) und/oder relativ zu der Andockvorrichtung (168) drehbar aufgenommen, insbesondere gelagert, sind.

13. Strömungsvorrichtung (100) nach einem der Ansprüche 1 bis 12, **dadurch gekennzeichnet, dass** die Strömungssegmente (112) im Wesentlichen unabhängig voneinander an der Rotorvorrichtung (136) aufgenommen, insbesondere gelagert, sind.

14. Strömungsvorrichtung (100) nach einem der Ansprüche 1 bis 13, **dadurch gekennzeichnet, dass** die Strömungssegmente (112) zur Kompensation von unterschiedlichen Wärmeausdehnungen in einer oder mehreren Raumrichtungen relativ zueinander bewegbar sind.

15. Verfahren zum Betreiben einer Strömungsvorrichtung (100) nach einem der Ansprüche 1-14, insbesondere zum Abscheiden von Rußpartikeln aus Verbrennungsabgas, wobei das Verfahren Folgendes umfasst:
Durchströmen mehrerer Strömungssegmente (112) der Strömungsvorrichtung (100) in einem Reinigungsmodus mit einem zu reinigendem Rohgasstrom (106), wobei Verunreinigungen aus dem Rohgasstrom (106) in Strömungskörpern (118) der Strömungssegmente (112) abgeschieden und/oder umgewandelt werden und stromabwärts der Strömungssegmente (112) ein Reingasstrom (108) erhalten wird;
Regenerieren eines oder mehrerer Strömungssegmente (112) mittels einer Regenerationsvorrichtung (160), wobei mittels einer Andockvorrichtung (168) der Regenerationsvorrichtung (160) eine temporäre Verbindung zwischen einem oder mehreren zu regenerierenden Strömungssegmenten (112) einerseits und einer Heizvorrichtung (162) und/oder einer Spülvorrichtung (164) der Regenerationsvorrichtung (160) andererseits hergestellt wird, **dadurch gekennzeichnet, dass** die Strömungskörper (118) im Reinigungsmodus in radialer Richtung von innen nach außen durchströmt werden.

16. Verfahren nach Anspruch 15, **dadurch gekennzeichnet, dass** das eine oder die mehreren zu regenerierenden Strömungssegmente (112) mittels der Andockvorrichtung (168) funktional und/oder fluidwirksam von den übrigen Strömungssegmenten (112) entkoppelt und mittels der Regenerationsvorrichtung (160) regeneriert werden, während die übrigen Strömungssegmente (112) weiterhin in einem Reinigungsmodus zum Entfernen von Verunreinigungen aus dem Rohgasstrom (106) genutzt werden.

## Claims

1. Flow device (100) for the removal of impurities from a stream of raw gas (106) and in particular for separating soot particles from combustion exhaust gas, wherein the flow device (100) comprises the following:
a plurality of flow segments (112) which each comprise one or more flow bodies (118) and through which the stream of raw gas (106) is arranged to flow for removing impurities in a cleaning mode, wherein the stream of raw gas (106) is arranged to be supplied to the flow segments (112) via a raw gas supply system (104) and wherein a stream of clean gas (108) that has been cleaned by means of the flow segments (112) is removable from the flow segments (112) by means of a clean gas removal system (110);
a regeneration device (160) for regenerating the flow segments (112), wherein the regeneration device (160) comprises a docking device (168) for establishing a temporary connection between one or more flow segments (112) that are to be regenerated on the one hand and a heating device (162) and/or a flushing device (164) of the regeneration device (160) on the other hand, **characterised in that** in the cleaning mode the flow through the flow bodies (118) is in a radial direction from the interior to the exterior, wherein the flow segments (112) are arranged at least approximately in the form of a ring, wherein the flow bodies (118) and/or flow body receptacles (120) for holding the flow bodies (118) project outwardly from a base body (114) of the respective flow segment (112) in the radial direction (122) taken with respect to a common central axis and/or a common axis of symmetry (116) of the flow segments (112), and wherein each flow segment (112) comprises a respective base body (114) and one or more flow bodies (118) and/or flow body receptacles (120) for accommodating the flow bodies (118) which project away from the base body (114) and in particular project radially outwardly.

2. A flow device (100) in accordance with Claim 1, **characterised in that** the flow device (100) is a separating device, **in that** the flow segments (112) are separating segments and **in that** the flow bodies (118) are separating bodies.

3. A flow device (100) in accordance with either of the Claims 1 or 2, **characterised in that** the flow device (100) comprises a moving device (140) for moving the docking device (168) and/or the flow segments (112) in such a manner that the docking device (168) is selectively dockable on different flow segments (112), wherein further provision is preferably made for the flow segments (112) to be settable into a rotary motion by means of the moving device (140).

4. A flow device (100) in accordance with any of the Claims 1 to 3, **characterised in that** each one of the flow segments (112) is constructed at least approximately in the form of a segment of a circular cylinder and/or **in that** the flow segments (112) together form an at least approximately circular cylindrical flow unit (138).

5. A flow device (100) in accordance with any of the Claims 1 to 4, **characterised in that** each flow segment (112) comprises a plurality of flow bodies (118) which are accommodated in mutually differing and/or mutually spatially-separated flow body receptacles (120) of the respective flow segment (112).

6. A flow device (100) in accordance with any of the Claims 1 to 5, **characterised in that** each flow segment (112) comprises a plurality of flow bodies (118) which
a) are arranged next to each other in a row and/or
b) are aligned such as to be parallel to one another and/or
c) through which a stream of raw gas (106) that is to be cleaned is arranged to flow in parallel with each other and independently of one another.

7. A flow device (100) in accordance with any of the Claims 1 to 6, **characterised in that** the base body (114) forms a raw gas distributer channel (156) of each flow segment (112) in the cleaning mode of the flow device (100).

8. A flow device (100) in accordance with any of the Claims 1 to 7, **characterised in that** one or more flow body receptacles (120) for accommodating one or more flow bodies (118) of each one of the flow segments (112) comprise a flange region (188) against which a flange region (188) of the docking device (168) corresponding thereto is placeable.

9. A flow device (100) in accordance with any of the Claims 1 to 8, **characterised in that** the docking device (168) comprises a plurality of docking connector pieces (176) which in particular are movable relative to the flow segments (112) and are pressable thereon.

10. A flow device (100) in accordance with any of the Claims 1 to 9, **characterised in that** the docking device (168) comprises a docking unit (170) that is movable relative to the flow segments (112) and comprises a main channel (175) as well as a plurality of docking connector pieces (176) which project away from the main channel (175) in the direction of the flow bodies (118) of the flow segments (112) of the main channel (175).

11. A flow device (100) in accordance with any of the Claims 1 to 10, **characterised in that** one or more flow segments (112) that are to be regenerated are fluidically separable by means of the docking unit (172) from the raw gas supply system (104) and the clean gas removal system (110) and are integrable into a regeneration gas guidance system (166) of the regeneration device (160).

12. A flow device (100) in accordance with any of the Claims 1 to 11, **characterised in that** the flow device (100) comprises a rotor device (136) by means of which the flow segments (112) are accommodated, and in particular are mounted, such as to be rotatable relative to a housing (102) of the flow device (100) and/or relative to the docking device (168).

13. A flow device (100) in accordance with any of the Claims 1 to 12, **characterised in that** the flow segments (112) are accommodated, and in particular mounted, in the rotor device (136) substantially independently of one another.

14. A flow device (100) in accordance with any of the Claims 1 to 13, **characterised in that** the flow segments (112) are movable relative to each other for the purposes of compensating for different thermal expansions in one or more spatial directions.

15. Method of operating a flow device (100) in accordance with any of Claims 1-14, in particular, for separating soot particles from combustion exhaust gas, wherein the method comprises the following:
in a cleaning mode, passing a stream of raw gas (106) that is to be cleaned through a plurality of flow segments (112) of the flow device (100) wherein impurities from the stream of raw gas (106) are separated and/or converted in flow bodies (118) of the flow segments (112) and a stream of clean gas (108) is obtained downstream of the flow segments (112);
regenerating one or more flow segments (112) by means of a regeneration device (160), wherein a temporary connection between one or more flow segments (112) that are to be regenerated on the one hand and a heating device (162) and/or a flushing device (164) of the regeneration device (160) on the other hand is established by means of a docking device (168) of the regeneration device (160), **characterised in that** in the cleaning mode the flow through the flow bodies (118) is in a radial direction from the interior to the exterior.

16. A method in accordance with Claim 15, **characterised in that** the one or more flow segments (112) that are to be regenerated are decoupled functionally and/or fluidically from the rest of the flow segments (112) by means of the docking device (168) and regenerated by means of the regeneration device (160) whilst the rest of the flow segments (112) continue to be used in a cleaning mode for removing impurities from the stream of raw gas (106).

## Revendications

1. Dispositif d'écoulement (100) pour l'élimination des impuretés hors d'un flux de gaz brut (106), plus particulièrement pour la séparation des particules de suie d'un gaz d'échappement de combustion, dans lequel le dispositif d'écoulement (100) comprend ce qui suit :
plusieurs segments d'écoulement (112) qui comprennent respectivement un ou plusieurs corps d'écoulement (118) et peuvent être traversés par le flux de gaz brut (106) pour l'élimination des impuretés dans un mode de purification, dans lequel, par l'intermédiaire d'une alimentation en gaz brut (104), le flux de gaz brut (106) peut être introduit dans les segments d'écoulement (112) et dans lequel un flux de gaz pur (108), purifié au moyen des segments d'écoulement (112), peut être évacué hors des segments d'écoulement (112) au moyen d'une évacuation de gaz pur (110) ;
un dispositif de régénération (160) pour la régénération des segments d'écoulement (112), dans lequel le dispositif de régénération (160) comprend un dispositif d'amarrage (168) pour l'établissement d'une liaison temporaire entre un ou plusieurs segments d'écoulement (112) à régénérer d'une part et un dispositif de chauffage (162) et/ou un dispositif de rinçage (164) du dispositif de régénération (160) d'autre part, **caractérisé en ce que** les corps d'écoulement (118) en mode de purification, peuvent être traversés dans la direction radiale de l'intérieur vers l'extérieur, dans lequel les segments d'écoulement (112) sont disposés de manière au moins approximativement annulaire, dans lequel les corps d'écoulement (118) et/ou des logements de corps d'écoulement (120) pour le logement des corps d'écoulement (118) s'éloignent par rapport à un axe central commun et/ou un axe de symétrie commun (116) des segments d'écoulement (112) dans la direction radiale (122) vers l'extérieur d'un corps de base (114) du segment d'écoulement (112) respectif et dans lequel chaque segment d'écoulement (112) comprend un corps de base (114) et un ou plusieurs corps d'écoulement (118) et/ou logements de corps d'écoulement (120) pour le logement des corps d'écoulement (118), s'éloignant du corps de base (114), plus particulièrement dépassant radialement vers l'extérieur.

2. Dispositif d'écoulement (100) selon la revendication 1, **caractérisé en ce que** le dispositif d'écoulement (100) est un dispositif de séparation, **en ce que** les segments d'écoulement (112) sont des segments de séparation et **en ce que** les corps d'écoulement (118) sont des corps de séparation.

3. Dispositif d'écoulement (100) selon l'une des revendications 1 ou 2, **caractérisé en ce que** le dispositif d'écoulement (100) comprend un dispositif de déplacement (140) pour le déplacement du dispositif d'amarrage (168) et/ou de segments d'écoulement (112) de façon à ce que le dispositif d'amarrage (168) puisse être amarré de manière sélective à différents segments d'écoulement (112), dans lequel de préférence il est prévu que les segments d'écoulement (112) puissent être mis en rotation au moyen du dispositif de déplacement (140).

4. Dispositif d'écoulement (100) selon l'une des revendications 1 à 3, **caractérisé en ce que** les segments d'écoulement (112) présentent, pris chacun isolément, la forme au moins approximative d'un segment de cylindre et/ou **en ce que** les segments d'écoulement (112) constituent ensemble une unité d'écoulement (138) de forme au moins approximativement cylindrique.

5. Dispositif d'écoulement (100) selon l'une des revendications 1 à 4, **caractérisé en ce que** chaque segment d'écoulement (112) comprend plusieurs corps d'écoulement (118) qui sont logés dans des logements de corps d'écoulement (120), différentes entre eux et/ou séparés entre eux dans l'espace, du segment d'écoulement (112) respectif.

6. Dispositif d'écoulement (100) selon l'une des revendications 1 à 5, **caractérisé en ce que** chaque segment d'écoulement (112) comprend plusieurs corps d'écoulement (118) qui
a) sont disposés les uns à côté des autres sur une ligne et/ou
b) sont orientées parallèlement entre eux et/ou
c) peuvent être traversés parallèlement entre eux et indépendamment entre eux avec un flux de gaz brut (106) à purifier.

7. Dispositif d'écoulement (100) selon l'une des revendications 1 à 6, **caractérisé en ce que** le corps de base (114) forme, en mode de purification du dispositif d'écoulement (100), un canal de distribution de gaz brut (156) de chaque segment d'écoulement (112).

8. Dispositif d'écoulement (100) selon l'une des revendications 1 à 7, **caractérisé en ce qu'**un ou plusieurs logements de corps d'écoulement (120) comprennent, pour le logement d'un ou plusieurs corps d'écoulement (118) de chaque segment d'écoulement (112), respectivement une partie de bride (188) contre laquelle une partie de bride (188) correspondante du dispositif d'amarrage (168) peut s'appuyer.

9. Dispositif d'écoulement (100) selon l'une des revendications 1 à 8, **caractérisé en ce que** le dispositif d'amarrage (168) comprend plusieurs raccords d'amarrage (176) qui peuvent être déplacés plus particulièrement par rapport aux segments d'écoulement (112) et être pressés contre ceux-ci.

10. Dispositif d'écoulement (100) selon l'une des revendications 1 à 9, **caractérisé en ce que** le dispositif d'amarrage (168) comprend une unité d'amarrage (170) mobile par rapport aux segments d'écoulement (112), qui comprend un canal principal (175) ainsi que plusieurs raccords d'amarrage (176) s'éloignant du canal principal (175) en direction des corps d'écoulement (118) des segments d'écoulement (112).

11. Dispositif d'écoulement (100) selon l'une des revendications 1 à 10, **caractérisé en ce qu'**un ou plusieurs segments d'écoulement (112) à régénérer peuvent être séparés de manière fluidique, au moyen de l'unité d'amarrage (172), de l'alimentation en gaz brut (104) et de l'évacuation de gaz purifié (110) et intégrés dans une conduite de gaz de régénération (166) du dispositif de régénération (160).

12. Dispositif d'écoulement (100) selon l'une des revendications 1 à 11, **caractérisé en ce que** le dispositif d'écoulement (100) comprend un dispositif de rotor (136) au moyen duquel les segments d'écoulement (112) sont logés, plus particulièrement montés, de manière rotative par rapport à un boîtier (102) du dispositif d'écoulement (100) et/ou par rapport au dispositif d'amarrage (168).

13. Dispositif d'écoulement (100) selon l'une des revendications 1 à 12, **caractérisé en ce que** les segments d'écoulement (112) sont logés, plus particulièrement montés, de manière globalement indépendante entre eux, sur le dispositif de rotor (136).

14. Dispositif d'écoulement (100) selon l'une des revendications 1 à 13, **caractérisé en ce que** les segments d'écoulement (112) sont mobiles les uns par rapport aux autres dans une ou plusieurs directions de l'espace afin de compenser différentes dilatations thermiques.

15. Procédé de fonctionnement d'un dispositif d'écoulement (100) selon l'une des revendications 1 - 14, plus particulièrement pour la séparation des particules de suie d'un gaz d'échappement de combustion,
dans lequel le procédé comprend ce qui suit :
traversée de plusieurs segments d'écoulement (112) du dispositif d'écoulement (100), en mode de purification, par un flux de gaz brut (106) à purifier, dans lequel les impuretés sont séparées du flux de gaz brut (106) dans des corps d'écoulement (118) des segments d'écoulement (112) et/ou transformés et un flux de gaz purifié (108) est obtenu en aval des segments d'écoulement (112) ;
régénération d'un ou plusieurs segments d'écoulement (112) au moyen d'un dispositif de régénération (160), dans lequel, au moyen d'un dispositif d'amarrage (168) du dispositif de régénération (160), une liaison temporaire est établie entre un ou plusieurs segments d'écoulement (112) à régénérer d'une part et un dispositif de chauffage (162) et/ou un dispositif de rinçage (164) du dispositif de régénération (160) d'autre part, **caractérisé en ce que** les corps d'écoulement (118) sont traversés, en mode de purification, dans la direction radiale de l'intérieur vers l'extérieur.

16. Procédé selon la revendication 15, **caractérisé en ce que** le ou les segments d'écoulement (112) à régénérer sont découplés de manière fonctionnelle et/ou fluidique des autres segments d'écoulements (112) au moyen du dispositif d'amarrage (168) et régénérés au moyen du dispositif de régénération (160), tandis que les autres segments d'écoulement (112) continuent d'être utilisés en mode de purification pour l'élimination des impuretés du flux de gaz brut (106).
